# EUROPEAN PATENT APPLICATION

(11) **EP 1 542 220 A2**
(43) Date of publication of application: **15.06.2005**
(21) Application number: 04029108.0
(22) Date of filing: 08.12.2004
(51) Int. Cl.: G11B 7/24, G11B 7/26

(54) **Optical information recording medium, manufacturing method of optical information recording medium, and optical information recording method**

(30) Priority: 09.12.2003 JP 2003409995
(71) Applicant: Fuji Photo Film Co., Ltd., Kanagawa (JP)
(72) Inventor: Usami, Yoshihisa, c/o Fuji Photo Film Co., Ltd., Odawara-shi, Kanagawa (JP)
(74) Representative: HOFFMANN - EITLE

(57) **Abstract**

The present invention provides an optical information recording medium that has on a substrate a pit or recording layer and a cover layer in this order and in which laser light is irradiated from a cover layer side to perform both recording and reproducing or either one of recording and reproducing, wherein a surface on which the laser light is irradiated of the cover layer has a projected portion having a height in the range of 3 to 90 µm; a manufacturing method of the optical information recording medium wherein the projected portion in the optical information recording medium is disposed by means of a printing method; and an optical information recording method wherein, in the case of the optical information recording medium having a recording layer, laser light having a wavelength in the range of 100 to 600 nm is irradiated from a cover layer side and causes the recording layer to physically or chemically change to record.

## Description

### BACKGROUND OF THE INVENTION

### Field of the Invention

The present invention relates to an optical information recording medium on which information can be recorded and from which information can be reproduced with laser light having a particular wavelength, a manufacturing method of the optical information recording medium, and an optical information recording method.

### Description of the Related Art

Heretofore, an optical information recording medium that can record information only once by use of laser light (an optical disk) has been known. The optical disk is also called a recordable CD (what is called a CD-R), with a typical configuration wherein a recording layer made of an organic dye, a reflective layer made of a metal such as gold, and a resinous protective layer (a cover layer) are laminated in this order on a transparent disc-like substrate. Information is recorded on the CD-R by irradiating near-infrared laser light (generally laser light with a wavelength of substantially 780 nm) on the CD-R. The irradiated area on the recording layer absorbs the light to cause a local rise in temperature and an ensuing physical or chemical change (e.g. the generation of a pit), thereby the optical characteristics of the area are caused to change to result in recording information. On the other hand, reading (reproducing) of the information is carried out in such a manner that laser light with the same wavelength as the laser light for recording on the CD-R is irradiated, and the difference in reflectance between an area wherein the optical characteristics of the recording layer have changed (a recorded area) and an area wherein the optical characteristics of the recording layer did not change (a non-recorded area) is detected.

Recently, an optical recording medium with higher recording density is in demand. In response to such a demand, an optical disk called a recordable digital versatile disk (what is called a DVD-R) is proposed (Nikkei New Media, supplementary volume "DVD", published in 1995). The DVD-R has a configuration wherein two disks each of which is manufactured by laminating, normally, on a transparent disc-like substrate on which a pre-groove for tracking laser light that is irradiated is formed with a groove width such narrow as a half or less that of the CD-R (0.74 to 0.8 µm), a recording layer having an organic dye, a reflective layer, and a protective layer in this order are adhered together with the recording layers each located inside; alternatively, a configuration in which the disc and a disc-like protective substrate having the same shape as the disc are adhered together with the recording layer located inside. The recording and reproducing of the information on and from the DVD-R are carried out by irradiation of visible laser light (normally, the laser light whose wavelength is in the range of 630 nm to 680 nm), and thereby the recording with higher density than CD-R can be realized.

Recently, the networks such as the Internet and the hi-vision television sets have been rapidly spreading. In addition, a broadcast for the HDTV (High Definition Television) has been begun. Under the circumstances, a recording media with large capacity that can record image information conveniently at a moderate price is in demand. In the present state of things, the DVD-R fulfills a role as a recording medium with large capacity sufficiently, however, considering that a demand for larger capacity and higher density is increasing all the more, it is also necessary to develop a recording medium that can meet such demand. Therefore, a recording medium that can achieve higher density recording with further shorter wavelength light than the DVD-R and has a much larger capacity has been under development.

In ordinary cases, higher density optical information recording medium can be achieved by making a wavelength of the laser for recording and reproducing shorter and making the NA of an objective lens higher to narrow a beam spot. Recently, lasers from red semiconductor lasers whose wavelengths are 680 nm, 650 nm and 635 nm, to bluish purple semiconductor lasers with an wavelength in the range of 400 nm to 500 nm that enables more and more dense recording (hereinafter, referred to as bluish purple laser) are rapidly developed, and optical recording media corresponding to these have been also developed. In particular, since the introduction of the bluish purple laser, development of an optical recording system that makes use of the bluish purple laser and a high NA pick up has been studied, and a rewritable optical information recording medium having a phase change recording layer and an optical recording system have been already publicized as a DVR-Blue system ( "ISOM2000" , pp 210-211). In addition, a DVR-Blue disk that is a recordable optical information recording medium having an organic dye and uses the bluish purple laser for the recording and reproducing has been made known ("ISOM2001", pp. 218-219). Owning to these optical information recording media, some positive results are achieved for an object of making the density of the medium higher.

In the optical information recording medium that is used in an optical recording system that makes use of the bluish purple laser and the high NA pickup as mentioned above, when the bluish purple laser is irradiated on a recording layer, in order to take the focus of the high NA object lens, a cover layer having a surface therefrom the laser light enters is made thin. Here, as the cover layer, for example, a thin film that is made of the same material as the substrate is used and adhered on a recording layer with an adhesive agent or a tackifier (Japanese Patent No. 3,431,612).

In the optical information recording medium having such a configuration, as is mentioned above, a cover layer side is an incidence surface of light. This configuration is different from that of a CD-R or a DVD-R wherein a substrate manufactured by injection molding is the incidence surface of light. In such a CD-R and a DVD-R, when a substrate that becomes the incident surface of light is molded by means of injection molding, in advance, a projected portion is simultaneously disposed to inhibit the surface from being flawed. By doing so, in the medium, the incidence surface of light is inhibited from being flawed owing to the sliding when mediums are piled or put on a table. However, as is mentioned above, in the optical information recording medium wherein the cover layer side is the light incidence surface, because the cover layer has to be thin and is disposed by laminating a film, at present, no countermeasure is taken to inhibit the light incidence surface from being flawed.

The invention is achieved in view of the problems mentioned above and intends to provide an optical information recording medium that can inhibit the light incidence surface in the cover layer from being flawed, a manufacturing method of the optical information recording medium, and an optical information recording method that uses the optical information recording medium.

### SUMMARY OF THE INVENTION

A first aspect of the present invention is to provide an optical information recording medium that has on a substrate a pit or recording layer and a cover layer in this order and in which laser light is irradiated from a cover layer side to perform both recording and reproducing or either one of recording and reproducing, wherein a surface on which the laser light is irradiated of the cover layer has a projected portion having a height in the range of 3 to 90 µm.

A second aspect of the invention is to provide a manufacturing method of an optical information recording medium that has on a substrate a pit or recording layer and a cover layer in this order, wherein a projected portion having a height in the range of 3 to 90 µm is disposed by means of a printing method.

A third aspect of the invention is to provide an optical information recording method including irradiating laser light having a wavelength in the range of 100 to 600 nm from a cover layer side on an optical information recording medium that has on a substrate a recording layer and a cover layer in this order and on the cover layer a projected portion having a height in the range of 3 to 90 µm and causing a physical or chemical change in the recording layer to record.

### BRIEF DESCRIPTION OF DRAWINGS

Fig. 1 is a schematic view of a top surface showing a disposition pattern of a projected portion according to example 1.
Fig.2 is a schematic view of a top surface showing a disposition pattern of a projected portion according to example 3.
Fig.3 is a schematic view of a top surface showing a disposition pattern of a projected portion according to example 7.

### DETAILED DESCRIPTION OF THE INVENTION

An optical information recording medium according to the present invention includes on a substrate a pit or recording layer and a cover layer in this order and in which laser light is irradiated from a cover layer side to perform both recording and reproducing or either one of recording and reproducing, wherein a surface on which the laser light is irradiated of the cover layer (hereinafter, appropriately, referred to as a light incidence surface) has a projected portion having a height in the range of 3 to 90 µm.

Here the optical information recording medium according to the invention is a mode including, at least, a substrate, a pit or recording layer, and a cover layer. Examples of the optical information recording medium having the mode include a read-only optical-information medium in which information is written into the pit (the recording portion) beforehand and only read can be carried out by the irradiation of the laser light and a recordable or rewritable optical information recording medium in which information can be recorded and read by irradiating the laser light.

Firstly, the indispensable members thereof will be explained in turn.

### [SUBSTRATE]

As a substrate in the invention, various materials used as substrate materials in existing optical information recording meda can be arbitrarily selected and used.

Specific examples of the material include glass; polycarbonates; acrylic resins such as polymethylmethacrylate; vinyl chloride base resins such as polyvinyl chloride and vinyl chloride copolymer; epoxy resins; amorphous polyloefins; polyesters; and metals such as aluminum, and a combination of two or more kinds thereof can be used if desired.

Among the materials mentioned above, from viewpoints of the moisture resistance, the dimensional stability and the low cost, thermoplastic resins such as amorphous polyolefins and polycarbonate are preferable, and polycarbonate is particularly preferable.

In the case of such resins being used, a substrate can be manufactured by means of injection molding.

It is required that a thickness of the substrate is in the range of 0.7 to 2 mm. Preferably it is in the range of 0.9 to 1.6 mm, and more preferably, in the range of 1.0 to 1.3 mm.

Furthermore, on the substrate, on a surface on a side where a recording layer is disposed, a tracking guide groove or convexities and concavities for representing information such as address signals (pre-groove) are formed. In order to achieve higher recording density, the pre-groove with a track pitch narrower than the track pitch of a CD-R or a DVD-R is necessary. For example, in the case of the optical information recording medium according to the invention being used as an appropriate medium that can cope with the bluish purple laser, the pre-groove that is formed is preferably in the range mentioned below.

An upper limit of the track pitch of the pre-groove is preferably 500 nm or less, more preferably 420 nm or less, and still more preferably 370 nm or less, and particularly preferably 330 nm or less. Furthermore, a lower limit of the track pitch of the pre-groove is preferably 50 nm or more, more preferably 100 nm or more, still more preferably 200 nm or more, and particularly preferably 260 nm or more.

An upper limit of a width (the half-value breadth) of the pre-groove is preferably 250 nm or less, more preferably 200 nm or less, still more preferably 170 nm or less, and particularly preferably 150 nm or less. Furthermore, a lower limit of the width of the pre-groove is preferably 23 nm or more, more preferably 50 nm or more, still more preferably 80 nm or more, and particularly preferably 100 nm or more.

An upper limit of a (groove) depth of the pre-groove is preferably 150 nm or less, more preferably 100 nm or less, still more preferably 70 nm or less, and particularly preferably 50 nm or less. In addition, a lower limit of the depth of the pre-groove is preferably 5 nm or more, more preferably 10 nm or more, still more preferably 20 nm or more, and particularly preferably 28 nm or more.

An upper limit of an angle of the pre-groove is preferably 80° or less, more preferably 70° or less, still more preferably 60° or less, and particularly preferably 50° or less. Furthermore, a lower limit of the angle of the pre-groove is preferably 20° or more, more preferably 30° or more, and still more preferably 40° or more.

Furthermore, any two of the upper limits and the lower limits relating to the pre-groove mentioned above can be arbitrarily combined.

The values of the pre-groove can be measured with an AFM (atomic force microscope). The angle of the pre-groove mentioned above is, when a depth of the groove is represented as D, with a surface of the substrate before the formation of the groove as a reference, an angle that a line connecting an inclined portion at a depth of D/10 from the surface thereof and an inclined portion at a depth D/10 from a deepest position of the groove forms relative to a substrate surface (bottom surface of the groove).

When the optical information recording medium according to the invention is a read-only optical information medium, simultaneously with the formation of the pre-groove, pits representing predetermined information are formed.

In order to manufacture a substrate having the pre-groove (and pit) of such a groove shape, it is necessary that a stamper that is used during the injection molding is formed owing to high precision mastering. In the mastering, in order to achieve the above-mentioned groove shape, it is preferable that cutting by DUV laser (whose wavelength is 330 nm or less; deep ultraviolet light) or EB (electron beam) is carried out.

On the other hand, when UV laser or visible laser is used, it is difficult to carry out excellent mastering in order to form the groove shape like the invention.

On a surface of the substrate that is on a side where an optical reflective layer mentioned below is disposed, in order to improve the planarity and to increase the adhesive force, an undercoat layer is preferably formed.

Examples of the materials of the undercoat layer include polymers such as polymethyl methacrylate, acrylate-methacrylate copolymers, styrene-maleic anhydride copolymers, polyvinyl alcohol, N-methylol acrylamide, styrene-vinyl toluene copolymers, chlorosulfonated polyethylene, cellulose nitrate, polyvinyl chloride, chlorinated polyolefin, polyester, polyimide, vinyl acetate-vinyl chloride copolymers, ethylenevinyl acetate copolymers, polyethylene, polypropylene and polycarbonate; and a surface modifier such as silane coupling agents.

The undercoat layer can be formed by preparing a coating liquid by dissolving or dispersing the material mentioned above in an adequate solvent, followed by coating the coating liquid on the surface of the substrate by means of a coating method such as a spin coat method, a dip coat method or an extrusion coat method. In general, a film thickness of the undercoat layer is in the range of 0.05 to 20 µm, and preferably in the range of 0.01 to 10 µm.

### [RECORDING LAYER]

A recording layer in the invention, though preferably made a dye type containing a dye as a recording substance, without restricting to that, may be an inorganic recordable type (a write once type), a phase change type, a photo-magnetic type and a read-only type as well.

Accordingly, examples of the recording materials that are contained in the recording layer include an organic compound such as a dye and a phase change metal compound.

Among these, the dye type recording layer that can write information only once with laser light is preferable. Such a dye type recording layer preferably contains a dye that has absorption in a recording wavelength region. As the dyes, cyanine dyes, oxonol dyes, metal complex dyes, azo dyes and phthalocyanine dyes can be cited.

Dyes described in Japanese Patent Application Laid-Open (JP-A) Nos.4-74690, 8-127174, 11-53758, 11-334204, 11-334205, 11-334206, 11-334207, 2000-43423, 2000-108513, and 2000-158818 can be also preferably used.

The recording layer like this is formed in such a manner that a coating liquid is prepared by dissolving a dye in an adequate solvent along with a binding agent, followed by coating the coating liquid on a substrate or on an light reflective layer described below to form a coating film, further followed by drying thereof. At this time, a temperature of a surface on which the coating liquid is coated is preferably in the range of 10 to 40 degrees centigrade. More preferably, a lower limit thereof is 15 degree centigrade or more, further more preferably 20 degrees centigrade or more, and particularly preferably 23 degrees centigrade or more. Furthermore, an upper limit thereof is more preferably 35 degrees centigrade or less, further more preferably 30 degrees centigrade or less, and particularly preferably 27 degrees centigrade or less. When the temperature of the coated surface is in the range mentioned above in this way, coating unevenness and coating failure can be inhibited from occurring and a thickness of a coating film can be made uniform.

Each of the upper limits mentioned above can be arbitrarily combined with each of the lower limits mentioned above.

Here, the recording layer may be either mono-layered or multi-layered. In the case of the recording layer having a multi-layered configuration, the recording layer can be formed by carrying out the coating step a plurality of times.

A concentration of the dye in the coating liquid is generally in the range of 0.01 to 15 mass percent, preferably in the range of 0.1 to 10 mass percent, more preferably in the range of 0.5 to 5 mass percent, and most preferably in the range of 0.5 to 3 mass percent.

Examples of the solvent for the coating liquid include esters such as butyl acetate, ethyl lactate and cellosolve acetate; ketones such as methyl ethyl ketone, cyclohexanone, and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether, and dioxane; alcohols such as ethanol, n-propanol, isopropanol, n-buthanol, and diacetone alcohol; fluorinated solvents such as 2,2,3,3-tetrafluoropropanol; and glycol ethers such as ethylene glycol monomethyl ether, ethylene glycol monoethyl ether and propylene glycol monomethyl ether.

The solvents mentioned above, in consideration of the solubility of the dye used, can be used singularly or in a combination of two or more kinds thereof. Furthermore, in the coating liquid, various kinds of the additives such as an antioxidant, a UV absorbent, a plasticizer and a lubricant can be added in accordance with the purpose.

As the coating method, a spray method, a spin coat method, a dip method, a roll coat method, a blade coat method, a doctor roll method and a screen print method can be cited.

At the coating, a temperature of the coating liquid is preferably in the range of 23 to 50 degrees centigrade, more preferably in the range of 24 to 40 degrees centigrade, among these particularly preferably in the range of 23 to 50 degrees centigrade.

A thickness of the recording layer formed in this way is, on the groove (the projected portion on the substrate), preferably 300 nm or less, more preferably 250 nm or less, further more preferably 200 nm or less, and particularly preferably 180 nm or less. A lower limit thereof is preferably 30 nm or more, more preferably 50 nm or more, further more preferably 70 nm or more, and particularly preferably 90 nm or more.

Furthermore, a thickness of the recording layer is, on a land (the concavity on the substrate), preferably 400 nm or less, more preferably 300 nm or less, and further more preferably 250 nm or less. A lower limit thereof is preferably 70 nm or more, more preferably 90 nm or more, and further more preferably 110 nm or more.

Still furthermore, a ratio of a thickness of the recording layer on the groove to a thickness of the recording layer on the land is preferably 0.4 or more, more preferably 0.5 or more, further more preferably 0.6 or more, and particularly preferably 0.7 or more. An upper limit thereof is preferably less than 1, more preferably 0.9 or less, further more preferably 0.85 or less, and particularly preferably 0.8 or less.

Each of the upper limits mentioned above can be arbitrarily combined with each of the lower limits mentioned above.

In the case of the coating liquid containing a binding agent, examples of the binding agent include the natural organic polymers such as gelatin, cellulose derivatives, dextran, rosin and rubber; and synthetic organic polymers such as hydrocarbonic resins such as polyethylene, polypropylene, polystylene and polyisobutylene, vinyl resins such as polyvinylchloride, polyvinylidene chloride and polyvinylchloride-polyvinyl acetate copolymers, acrylic resins such as polymethyl acrylate and polymethyl methacrylate, and initial condensates of thermosetting resins such as polyvinyl alcohol, chlorinated polyethylene, epoxy resin, butyral resin, rubber derivatives and phenol formaldehyde resin. In the case of the binding agent being used together as a material of the recording layer, an amount of the binding agent used is generally in the range of 0.01 to 50 times an amount of dye (mass ratio), and more preferably in the range of 0.1 to 5 times the amount of dye (mass ratio).

In the recording layer, in order to increase the light resistance of the recording layer, various kinds of the fading resistance agents can be contained.

As for the fading resistance agent, in general, a singlet oxygen quencher is used. As the singlet oxygen quencher, those described in the publication such as the already known patent specification can be used.

Specific examples of that include ones described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, 4-25492, Japanese Patent Application Publication (JP-B) Nos. 1-38680 and 6-26028; German Patent No.350399; and *Nippon Kagaku Kaishi,* October (1992), p.1141.

An amount used of the fading resistance agent such as the singlet oxygen quencher is, to an amount of the dye, generally in the range of 0.1 to 50 mass percent, preferably in the range of 0.5 to 45 mass percent, more preferably in the range of 3 to 40 mass percent and particularly preferably in the range of 5 to 25 mass percent.

A solvent coating method in the case of the recording layer being a dye type recording layer is described above, however, in accordance with the physical properties of the recording substance, the recording layer can be formed also with a deposition method such as a vacuum evaporation, a sputtering and CVD method.

For example, in the case of a phase change metal compound being used as the recording material, it is preferable to use such methods to form the recording layer. As the phase change metal compound, any one of the SbTe, AgSbTe and InAgSbTe can be used.

### [COVER LAYER]

A cover layer according to the invention indispensably has on an inner periphery portion and/or an outer periphery portion of a light incidence surface a projected portion having a height in the range of 3 to 90 µm, and, on the recording layer mentioned above or a barrier layer mentioned below, is bonded through an adhesive or a tackifier.

Such a projected portion functions as a spacer; accordingly, even when the light incidence surface of the cover layer is brought into contact with other optical information recording media or a hard surface of such as a desk and slid, the light incidence surface can be inhibited from being flawed. Accordingly, excellent recording and reproducing characteristics can be obtained. Such a projected portion can be disposed on either one of the inner periphery portion or the outer periphery portion, and the projected portion also can be disposed on both of them. Among these, the projected portion is preferably disposed on both of the inner periphery portion and the outer periphery portion.

Here, in the invention, "the inner periphery portion and the outer periphery portion of a surface on which laser light is irradiated (a light incidence surface)" preferably indicate, in the light incidence surface of the cover layer, a region corresponding to an inner periphery side of a recording region and a region corresponding to an outer periphery side of the recording region. The recording region is usually disposed in a range of 46 to 117 mm in diameter. Accordingly, the inner periphery portion of the light incidence surface is preferable to be a region from an end of a center hole to a diameter of 46 mm while the outer periphery portion of the light incidence surface is preferable to be a region from a diameter of 117 mm to the outermost edge of the disk.

Among these, in the case of the projected portion being disposed on the inner periphery portion, the innermost side of a disposition region thereof is preferably 16 mm or more in the diameter, more preferably 20 mm or more in the diameter, and further more preferably 25 mm or more in the diameter. Furthermore, in the case of the projected portion being disposed on the inner periphery portion, the outermost side of the disposition region thereof is preferably 45 mm or less in the diameter, more preferably 40 mm or less in the diameter, and further more preferably 35 mm or less in the diameter. Each of the upper limits mentioned above can be arbitrarily combined with each of the lower limits mentioned above.

On the other hand, in the case that the projected portion is disposed on the outer periphery portion, the outermost side of the region is preferably 0.1 mm or more inside than an outer diameter of the cover layer, more preferably 0.3 mm or more inside than that, further more preferably 0.5 mm or more inside than that, and particularly preferably 1.0 mm or more inside than that. In the case that the projected portion is disposed on the outer periphery portion, the innermost side of the region is preferably 3.0 mm or less inside than an outer diameter of the cover layer, more preferably 2.0 mm or less inside than that, and further more preferably 1.5 mm or less inside than that. Each of the upper limits mentioned above can be arbitrarily combined with each of the lower limits mentioned above.

In addition, in a region corresponding to a further inner periphery portion than the projected portion disposed on the inner periphery portion and/or a region corresponding to a further outer periphery portion than the projected portion disposed on the outer periphery portion, a recording region may be disposed.

A region in which the projected portion according to the invention is disposed may overlap the recording region. However, in such a case, the recording and reproducing characteristics of the overlapping regions are, compared with those of the other regions, likely to be high in occurrence of errors. Accordingly, a magnitude of projected portion as well as the selection of a material constituting the projected portion has to be determined more precisely.

A height of the projected portion according to the invention indicates a height of a point that is most protruding from the light incidence surface of the cover layer.

As a height (thickness) of such a projected portion, as mentioned above, the lower limit thereof is necessarily 3 µm or more, preferably 5 µm or more, more preferably 7 µm or more and further more preferably 9 µm or more. Furthermore, the upper limit thereof is, as aforesaid, necessarily 90 µm or less, preferably 70 µm or less, more preferably 50 µm or less and further preferably 30 µm or less.

Each of the upper limits mentioned above can be arbitrarily combined with each of the lower limits mentioned above.

In the case of the lower limit of the height of the projected portion being less than 3 µm, the scratch prevention function does not tend to work well. In the case of the upper limit thereof being more than 90 µm, there are problems concerning the cost, a decrease in the productivity, and in addition, the generation of warp.

In order to more heighten an effect caused by the disposition of the projected portion, the projected portion preferably has a uniform height. For example, in the case that the projected portion is disposed on both the inner periphery portion and the outer periphery portion, both the projected portions preferably have an equal or approximate height.

Such a projected portion, as far as it falls within a predetermined region and a predetermined height mentioned above, can have any kind of disposition patterns, and there is no restriction on a shape of the projected portion. For example, a projected portion may have a disposition pattern where a plurality of protrusions is dispersingly disposed in a predetermined region, or a disposition pattern wherein protrusions are continuously disposed on a circle concentric with a cover layer to form a ring shape. The projected portion may also have a disposition pattern that is disposed so as to have a desired design property and provided with the visibility and the discernability and a function of displaying information. Among these, as the disposition pattern of the projected portion, the projected portion is preferably disposed so as to be symmetrical from a center of the cover layer. When the disposition pattern of the projected portion is made symmetrical in this way, it is possible to inhibit the disk from losing its balance to generate vibration while the disk rotates at a high speed in a recording/ reproducing device.

On the other hand, a protrusion shape of the projected portion may be a horn shape, a hemispherical shape, or a shape that combines these.

The projected portion in the invention may be disposed while the cover layer is molded. That is, it may be disposed beforehand on a resin film mentioned below, or it may be disposed by adding a step of forming a projected portion before or after a step of bonding the cover layer. Among these, it is preferable to form the projected portion after bonding the cover layer by use of a printing method mentioned below.

The projected portion in the invention is preferably made from the material same as that of the cover layer, that is, resins such as a radiation curable resins that are cured by irradiating infra-red light, ultraviolet light or electron beam, thermosetting resins and heat drying resins. More preferably, a ultraviolet curable resin can be used.

Specific examples thereof include trade name: UV DVC series, manufactured by Teikoku Ink Co., Ltd.; trade name: SCR series, manufactured by Dainichiseika Color & Chemicals Mfg. Co., Ltd.; trade names: SSD series and DG series, manufactured by Dainippon Ink and Chemicals Incorporated.

In order to impart a desired color to the projected portion, it is possible to use these resins and the dyes (various kinds of dyes and pigments) in combination. It is also possible to use commercially available ultraviolet curable ink.

In the next place, a method of forming a projected portion is described.

In an optical information recording medium according to the invention, in a preferable mode, a projected portion is disposed by means of a printing method.

According to the manufacturing method of the optical information recording medium according to the invention, the projected portion of the optical information recording medium according to the invention is disposed by means of a printing method.

As the specific examples of the printing method, a screen printing method and an offset printing method can be cited. A resin coated film formed by means of these printing methods is cured by a given curing method corresponding to the resin, such as the irradiation of ultraviolet light, to cure and form a projected portion.

In this way, by using a printing method, it becomes possible to form a projected portion having a desired disposition pattern easily and accurately. In addition to this, it is also possible to apply multi-color printing.

The projected portion may also be formed by a method wherein a coating liquid is prepared by dissolving the resin material in an adequate solvent, followed by coating the coating liquid, further followed by curing by means of a predetermined curing method (such as irradiation of an electron beam, drying, or thermosetting). Alternatively, a film-like resin may be adhered to form.

In addition to this, by repeating these printing steps or laminating a plurality of film-like resins, a projected portion having a multi-layered structure may be formed.

As far as a film made from a transparent material is used, there is no particular restriction on the cover layer used in the invention. However, polycarbonates; acrylic resins such as polymethyl methacrylate; vinyl chloride resins such as polyvinylchloride and vinyl chloride copolymers; epoxy resins; amorphous polyolefins; polyester; and cellulose triacetate can be preferably used. Among these, polycarbonate or cellulose triacetate can be preferably used.

"Transparent" means to be 80 percent or more in the transmittance to light used for recording and reproducing.

In the cover layer, as far as the effect of the invention is not disturbed, various kinds of additives can be included. For example, the cover layer may include a UV absorbent that cuts light whose wavelength is 400 nm or less and/or a dye that cuts light whose wavelength is 500 nm or more.

Furthermore, as the physical properties of a surface of the cover layer, the surface roughness is preferably 5 nm or less in both the two-dimensional roughness parameter and the three-dimensional roughness parameter.

From a viewpoint of the collecting power of light used in recording and reproducing, the birefringence of the cover layer is preferably 10 nm or less.

A thickness of the cover layer is appropriately provided with a wavelength of the laser light irradiated for recording and reproducing and the NA. However, in the invention, it is in the range of 0.01 to 0.5 mm, and more preferably in the range of 0.05 to 0.12 mm.

A total thickness of a layer that is made of the cover layer and a layer of an adhesive agent or a tackifier is preferably in the range of 0.09 to 0.11 mm, and more preferably in the range of 0.095 to 0.105 mm.

On the light incidence surface of the cover layer, in order to inhibit the light incidence surface from being flawed while an optical information recording medium is manufactured, a protective layer (a hard coat layer) may be disposed.

As the adhesive that is used to bond the cover layer, for example, a UV curable resin, EB curable resin and a thermosetting resin can be preferably used, and particularly preferably the UV curable resin can be used.

In the case of the UV curable resin being used as the adhesive, the UV curable resin as that or a coating liquid prepared by dissolving the UV curable resin in an adequate solvent such as methyl ethyl ketone and ethyl acetate may be supplied from a dispenser on a surface of a barrier layer. In order to inhibit the manufactured optical information recording medium from warping, the UV curable resin constituting the adhesive layer preferably has a small curing contraction rate. As an example of such UV curable resin, UV curable resins such as trade name SD-640, manufactured by Dainippon Ink and Chemicals, Incorporated can be cited.

It is preferable that, for example, a predetermined amount of the adhesive is coated on a bonded surface made of a barrier layer, thereon a cover layer is disposed, followed by spreading by means of spin coating the adhesive evenly between the bonded layer and the cover layer, furthermore followed by curing the adhesive.

A thickness of the adhesive layer made of such adhesive is preferably in the range of 0.1 to 100 µm, more preferably in the range of 0.5 to 50 µm, and further more preferably in the range of 10 to 30 µm.

As the tackifier used to bond the cover layer, an acrylic, a rubber base and a silicon base tackifier can be used. However, from viewpoints of the transparency and the durability, the acrylic tackifiers are preferable. As such acrylic tackifiers, ones in which with 2-ethylhexyl acrylate or n-butyl acrylate as a main component thereof, in order to increase the cohesive force, a short chained alkyl acrylate or methacrylate such as methyl acrylate, ethyl acrylate and methyl methacrylate, and acrylic acid, methacrylic acid, acrylamide derivative, maleic acid, hydroxyl ethyl acrylate and glycidyl acrylate all of which can work as a crosslinking point with a cross-linking agent are copolymerized can be preferably used. By properly regulating a blending ratio and the kinds of the main component, the short-chained component and the component to add the cross-linking point, the glass transition temperature (Tg) and cross-linking density can be varied.

As the cross-linking agent used together with the tackifier, for example, isocyanate base cross-linking agents can be cited. Examples of such isocyanate base cross-linking agents include isocyanates such as trilene diisocyanate, 4, 4'-diphenylmethane diisocyanate, hexamethylene diisocianate, xylylene diisocyanate, naphthylene 1,5-diisocyanate, o-toluidine diisocyanate, isohorone diisocyanate and triphenylmethane triisocyanate; or products of the isocyanates and polyalcohols; or polyisocyanates produced by the condensation of the isocyanates. Examples of commercially available products of the isocyanates include trade names: Coronate L, Coronate HL, Coronate 2030, Coronate 2031, Millionate MR and Millionate HTL manufactured by Nippon Polyurethane Industry Co. Ltd.; trade names: Takenate D-102, Takenate D-110N, Takenate D-200 and Takenate D-202 manufactured by Takeda Chemical Industries Co., Ltd.; and trade names: Desmodule L, Desmodule IL, Desmodule N and Desmodule HL manufactured by Sumitomo Bayer Co., Ltd.

The tackifier, after a predetermined amount thereof is coated uniformly on the bonded surface made of the barrier layer and thereon a cover layer is disposed, may be cured, or, after a predetermined amount of the tackifier is beforehand coated on one surface of the cover layer to form a tackifier coated film and the coated film is laminated to the bonded surface, may be cured.

Furthermore, as the cover layer, a commercially available adhesive film on which a tackifier layer is disposed beforehand may be used.

A thickness of the tackifier layer made of the tackifier is preferably in the range of 0.1 to 100 µm, more preferably in the range of 0.5 to 50 µm, and further more preferably in the range of 10 to 30 µm.

### [OTHER LAYERS]

The optical information recording medium according to the invention may have, as far as the effect of the invention is not damaged, in addition to the indispensable layers mentioned above, other optional layers. As the optional layers, for example, a light reflective layer disposed between the substrate and the recording layer (described later), a barrier layer disposed between the recording layer and the cover layer (described later), and an interface layer disposed between the light reflective layer and the recording layer can be cited.

All of the indispensable layers as well as the optional layers can be a singular layer or may have a multi-layered structure.

### [LIGHT REFLECTIVE LAYER]

In the invention, in order to increase the reflectance to the laser light or to impart a function of improving the recording and reproducing characteristics, a light reflective layer is preferably disposed between the substrate and the recording layer.

The light reflective layer can be formed on a substrate by vacuum evaporation, sputtering or ion plating a light reflective material having high reflectance to the laser light.

A layer thickness of the light reflective layer is generally in the range of 10 to 300 nm and preferably in the range of 50 to 200 nm.

In addition to this, the reflectance is preferably 70 percent or more.

Examples of the light reflective materials high in the reflectance include metals and metalloids such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, or stainless steel. The light reflective materials may be used singularly, or in combinations of two or more kinds thereof, or as alloys thereof also can be used. Among these, Cr, Ni, Pt, Cu, Ag, Au, Al and stainless steel are preferable. Particularly preferably, Au, Ag, Al or the alloys thereof can be used, and most preferably, Au, Ag or alloys thereof can be used.

### [STEP OF FORMING BARRIER LAYER (INTERMEDIATE LAYER)]

In the invention, it is preferable to form a barrier layer between the recording layer and the cover layer.

The barrier layer is disposed in order to increase the storage stability of the recording layer, to increase the adhesiveness between the recording layer and the cover layer, to control the reflectance, and to control the thermal conductivity.

There is no restriction on materials used for the barrier layer, as far as these are materials that can transmit light that is used for recording and reproducing and also can exhibit the above functions. For example, in general, it is preferably a material low in the permeability of gas and water and dielectrics.

Specifically, materials made of nitrides, oxides, carbides and sulfides of Zn, Si, Ti, Te, Sn, Mo and Ge are preferable. Among these, ZnS, MoO₂, GeO₂, TeO, SiO₂, TiO₂, ZnO, ZnS-SiO₂, SnO₂ and ZnO-Ga₂O₃ are preferable, and ZnS-SiO₂, SnO₂ and ZnO-Ga₂O₃ are more preferable.

The barrier layer can be formed also by a vacuum film formation method such as vacuum evaporation, DC sputtering, RF sputtering or ion plating. Among these, it is more preferable to use the sputtering method, and the RF sputtering can be further more preferably used.

A thickness of the barrier layer according to the invention is preferably in the range of 1 to 200 nm, more preferably in the range of 2 to 100 nm, and further more preferably in the range of 3 to 50 nm.

As mentioned above, the optical information recording medium according to the invention has at least a substrate, a recording layer and a cove layer, the cover layer having a projected portion on an inner periphery portion and/or an outer periphery portion of a light incidence surface thereof. As described above, in the optical information recording medium according to the invention, as the projected portion works as a spacer, even when the light incidence surface and a hard surface are slid against each other, the light incidence surface can be inhibited from being flawed. Accordingly, the incidence of the laser light can be carried out precisely and the recording and reproducing characteristics become excellent.

In an optical information recording method according to the invention, in the case of the optical information recording medium according to the invention having a recording layer, laser light having a wavelength in the range of 100 to 600 nm is irradiated from the cover layer side and thereby the recording layer is physically or chemically changed to record.

Like the optical information recording method according to the invention, when laser light with a proper wavelength is irradiated to the optical information recording medium with the above-mentioned configuration to record, the method can impart excellent and stable recording and reproducing characteristics.

As described above, the optical information recording medium according to the invention has a projected portion on the cover layer side from which light enters. Accordingly, in order to carry out recording precisely and excellently, the laser light is preferably irradiated so as to avoid the projected portion to record. In order to irradiate the laser light while avoiding the projected portion in this way, for example, there is a method wherein a recording device having a laser light source is provided with a sensor to detect a disposition place of the projected portion, and, in accordance with an output result of such a sensor, through a soft, a circuit, or a mechanical mechanism, a place to irradiate the laser light is controlled.

The lower limit of a recording wavelength (wavelength of the laser light) is preferably 200 nm or more, more preferably 300 nm or more, and particularly preferably 350 nm or more. The upper limit thereof is preferably 500 nm or less, more preferably 450 nm or less, and particularly preferably 420 nm or less.

Each of the upper limits mentioned above can be arbitrarily combined with each of the lower limits mentioned above.

Information may be recorded in a groove of the optical information recording medium according to the invention or may be recorded on a land; however, it is preferable to record in the groove.

Furthermore, the laser light having a wavelength in the wavelength region mentioned above can also reproduce the information.

More specifically, recording and reproducing of the information with the optical information recording medium (recordable type) according to the invention and the optical information recording method according to the invention are carried out, for example, in the following way.

Firstly, with the optical information recoding medium rotating at a predetermined linear velocity (0.5 to 10 m/sec) or a predetermined constant angular velocity, from the cover layer side through an objective glass, light for recording such as a bluish purple laser (such as wavelength of 405 nm) is irradiated. Owing to the irradiated light, the recording layer absorbs the light to raise a temperature locally, thereby for example a pit is generated to change the optical characteristics thereof, and thereby information is recorded. The reproduction of the information recorded in the above-mentioned way can be carried out in such a manner that with the optical information recording medium rotating at a predetermined constant linear velocity, the bluish purple laser light is irradiated from the cover layer side and the reflected light is detected.

As the laser light source having a lasing wavelength of 500 nm or less as mentioned above, a bluish purple semiconductor laser having a lasing wavelength in the range of, for instance, 390 to 415 nm and a bluish purple SHG laser with a central lasing wavelength at 425 nm can be cited.

In addition to this, in order to increase the recording density, the NA of the objective lens that is used for a pickup is preferably 0.7 or more, and more preferably 0.85 or more.

### EXAMPLES

In what follows, the present invention will be further detailed with reference to examples. However, the invention is not restricted to the examples.

### (EXAMPLE 1)

### <MANUFACTURING OF OPTICAL INFORMATION RECORDING MEDIUM>

### (SUBSTRATE)

An injection molded substrate that has a thickness of 1.1 mm, an external diameter of 120 mm, an inner diameter (a diameter of a central hole) of 15 mm, and a spiral pre-groove (with a track pitch of 320 nm, a groove width of 105 nm, and a groove depth of 36 nm), and is made of a polycarbonate resin, was used.

### (FORMATION OF LIGHT REFLECTIVE LAYER)

On the pre-groove of the substrate, by use of trade name: Cube, manufactured by Unaxis, in an atmosphere of Ar, by means of DC sputtering, an APC light reflective layer (Ag: 98.1 mass percent, Pd: 0.9 mass percent, and Cu: 1.0 mass percent) as a vacuum deposition layer with a film thickness of 100 nm was formed. The film thickness of the light reflective layer was controlled by a sputter time.

### (FORMATION OF RECORDING LAYER)

Two grams of a dye A represented by the following chemical formula was added to 100 ml of 2, 2, 3, 3-tetrafluoropropanol to dissolve, and thereby a dye containing coating liquid was prepared. On the light reflective layer, the prepared dye containing coating liquid was coated by means of the spin coat method, with the number of revolutions varying in the range of 300 to 4000 rpm, under conditions of 23 degrees centigrade and 50 percent RH. Then, it was stored for 1 hr at 23 degrees centigrade and 50 percent RH, and a recording layer (with a thickness on the groove of 130 nm and a thickness on the land of 180 nm) was formed.

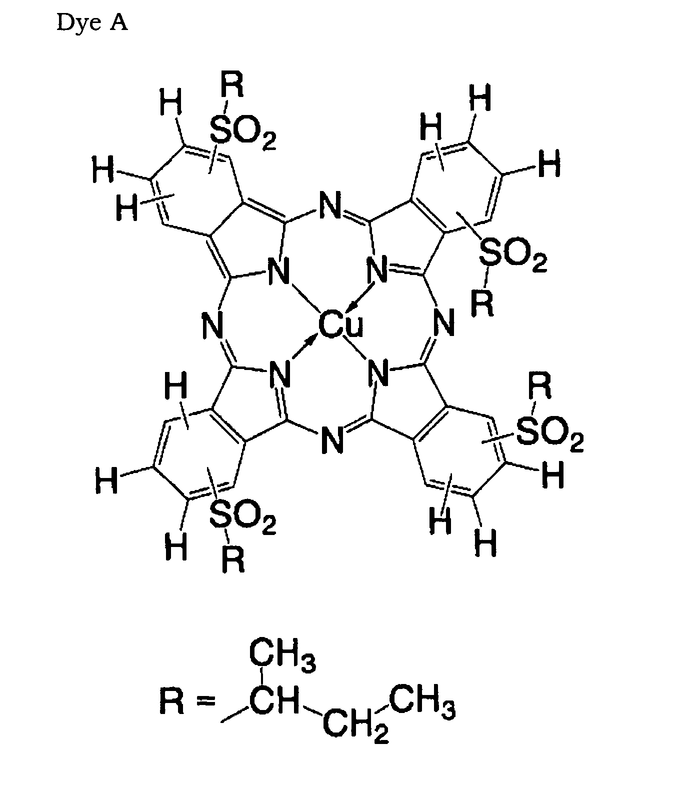

After the recording layer was formed, in a clean oven, annealing treatment was carried out. The substrates were supported on a vertical stack pole distanced with spacers and the annealing treatment was applied at 80 degrees centigrade for 1 hr.

### (FORMATION OF BARRIER LAYER)

After that, on the recording layer, by use of trade name: Cube, manufactured by Unaxis, in an atmosphere of Ar, by means of RF sputtering, a barrier layer that was 5 nm in thickness and made of ZnO-Ga₂O₃ (ZnO: Ga₂O₃= 7: 3 (by mass ratio)) was formed.

### (BONDING OF COVER LAYER)

As a cover layer, with a polycarbonate film (Trade name: Teijin Pure Ace, thickness: 80 µm) having an internal diameter of 15 mm, an external diameter of 120 mm, and one surface on which a tackifier was used, a sum total of thicknesses of the tackifier layer and the polycarbonate film was controlled so as to be 100 µm.

Then, after the cover layer was disposed on the barrier layer so that the barrier layer and the tackifier layer may come into contact, the cover layer was pressure bonded by use of a pressing member to bond.

### (FORMATION OF PROJECTED PORTION)

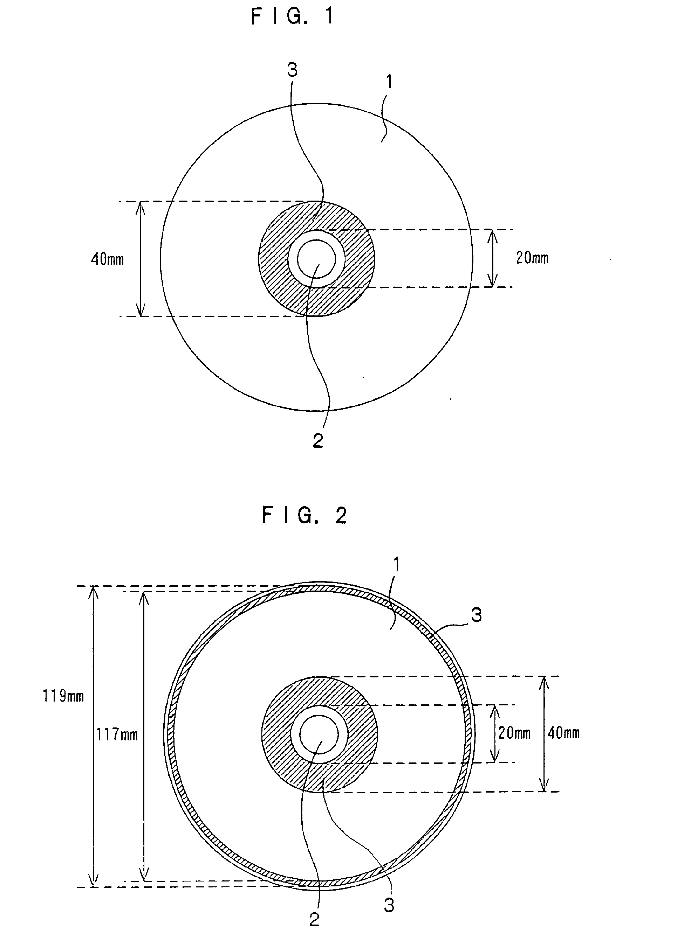

On a surface of the bonded cover layer (light incidence surface), a projected portion with a disposition pattern shown in Fig. 1 was formed. In Fig. 1, a region where the projected portion was disposed is represented as a hatched portion. Specifically, with a UV curable resin (trade name: UV DVC-616 White, manufactured by Teikoku Ink Mfg. Co., Ltd.), and, by use of a screen printer, in a region from an internal diameter of 20 mm to an external diameter of 40 mm, a resin coated film was formed. Then, UV light was irradiated to cure the resin coated film. A thickness of the formed projected portion was 10 µm.

According to these steps, the optical information recording medium according to example 1 was manufactured.

### <EVALUATION OF OPTICAL INFORMATION RECORDING MEDIUM>

### (1) SCRATCH EVALUATION OF LIGHT INCIDENCE SURFACE

The optical information recording mediums obtained were put on a desk with the light incidence surfaces opposed each other, and they were slid each other by reciprocating a distance of substantially 30 cm. A state of the light incidence surface after the sliding was evaluated visually. The evaluations were done of one that was slid three times (reciprocating) and one that was slid twenty times (reciprocating).

### (2) JITTER EVALUATION

With the optical information recording medium obtained according to the above way, by use of a recording and reproducing evaluation device (trade name: DDU1000, manufactured by Pulstec Industrial Co., Ltd.) provided with a 403 nm laser and a NA 0.85 pickup, at a clock frequency of 66 MHz and a liner velocity of 5.28 m/ s, a random signal was recorded and reproduced, and the jitter was measured with a spectral analyzer (trade name: Pulstec MSG2). The evaluation was carried out according to the optical information recording method according to the invention, and the recording was done on the groove. In addition to this, the recording power was 5.2 mW and the reproducing power was 0.4 mW. The result is shown in Table 1 (in Table 1, it is shown as initial data). Here, it is indicated that the jitter being less than 10 percent is practically preferable.

For the samples obtained by sliding the optical information recording medium obtained according to the method mentioned above three times in the same way as the scratch evaluation mentioned above, the jitter was measured in the same way as that mentioned above. The results are shown in Table 1.

### (3) MEASUREMENT OF VALUE OF RADIAL TILT (R-TILT) AND EVALUATION OF WARPING

To the optical information recording medium obtained according to the method mentioned above, a state of warping of the optical information recording medium as a whole was evaluated by measuring an inclination in a radial direction (radial tilt value). The radial tilt value was measured by use of trade name DLD 4000 (manufactured by Japan EM Co., Ltd). Results of the measurement are shown in Table 1.

### (EXAMPLE 2)

Except that, in the step of forming the projected portion in example 1, the printing operation was repeated twice so as to make the projected portion in a two-layered structure with a total thickness of 20 µm, similarly to example 1, an optical information recording medium according to example 2 was manufactured. The optical information recording medium obtained was evaluated in the same way as example 1. The results of the evaluation are shown in Table 1.

### (EXAMPLE 3)

Except that, in the step of forming the projected portion in example 1, in addition to an projected portion at an inter periphery portion, a projected portion was formed at an outer periphery portion so as to form a disposition pattern as shown in Fig. 2, similarly to example 1, an optical information recording medium according to example 3 was manufactured. As is shown in Fig. 2, the projected portion at the outer periphery portion was formed in a region from an internal diameter of 117 mm to an external diameter of 119 mm. A thickness of each of coated films was 10 µm. In Fig.2, a region where the projected portion was formed is shown as a hatched portion.

Subsequently, the obtained optical information recording medium was evaluated in the same way as example 1. Results of the evaluation are shown in Table 1.

### (EXAMPLE 4)

Except that in the step of forming the projected portion in example 1, the printing operation was repeated six times so as to form a projected portion made of six layers with a total thickness of 60 µm, similarly to example 1, an optical information recording medium according to example 4 was manufactured. The optical information recording medium obtained was evaluated in the same way as example 1. Results of the evaluation are shown in Table 1.

### (EXAMPLE 5)

Except that in the step of forming the projected portion in example 1, the printing operation was repeated eight times so as to form a projected portion made of eight layers with a total thickness of 80 µm, similarly to example 1, the optical information recording medium according to example 5 was manufactured. The optical information recording medium obtained was evaluated in the same way as example 1. Results of the evaluation are shown in Table 1.

### (EXAMPLE 6)

Except that in the step of forming the projected portion in example 1, a projected portion was made so as to have a height of 6 µm, similarly to example 1, an optical information recording medium according to example 6 was manufactured. The optical information recording medium obtained was evaluated in the same way as example 1. Results of the evaluation are shown in Table 1.

### (EXAMPLE 7)

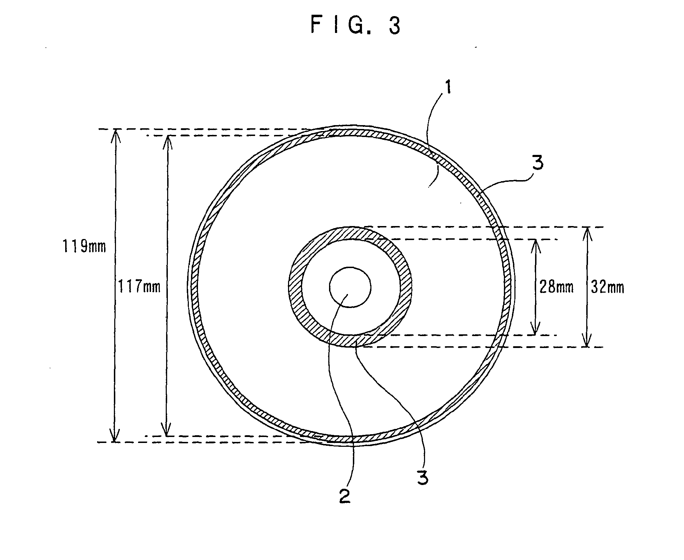

Except that in the step of forming the projected portion in example 1, a projected portion was made so as to have a disposition pattern shown in Fig. 3, an optical information recording medium according to example 7 was manufactured. As is shown in Fig. 3, a projected portion on an inner periphery portion was formed in a region from an internal diameter of 28 mm to an external diameter of 32 mm, and a projected portion on an outer periphery portion was formed in a region from an internal diameter of 117 mm to an external diameter of 119 mm. A thickness of each of coated films formed was 10 µm. In Fig.3, a region where the projected portion was disposed is shown as a hatched portion.

In the next place, the obtained optical information recording medium was evaluated in the same way as example 1. Results of the evaluation are shown in Table 1.

### (COMPARATIVE EXAMPLE 1)

Except that in example 1, a cover layer was not provided with a projected portion, similarly to example 1, an optical information recording medium according to comparative example 1 was manufactured. The optical information recording medium obtained was evaluated in the same way as example 1. Results of the evaluation are shown in Table 1.

### (COMPARATIVE EXAMPLE 2)

Except that, in the step of forming a projected portion in example 1, a projected portion was made so as to have a height of 2 µm, similarly to example 1, an optical information recoding layer according to comparative example 2 was manufactured. The optical information recording medium obtained was evaluated in the same way as example 1. Results of the evaluation are shown in Table 1.

### (COMPARATIVE EXAMPLE 3)

Except that, in the step of forming a projected portion in example 1, a projected portion was made so as to have a height of 100 µm, similarly to example 1, an optical information recording medium according to comparative example 3 was manufactured. The optical information recoding medium obtained was evaluated in the same way as example 1. Results of the evaluation are shown in Table 1.

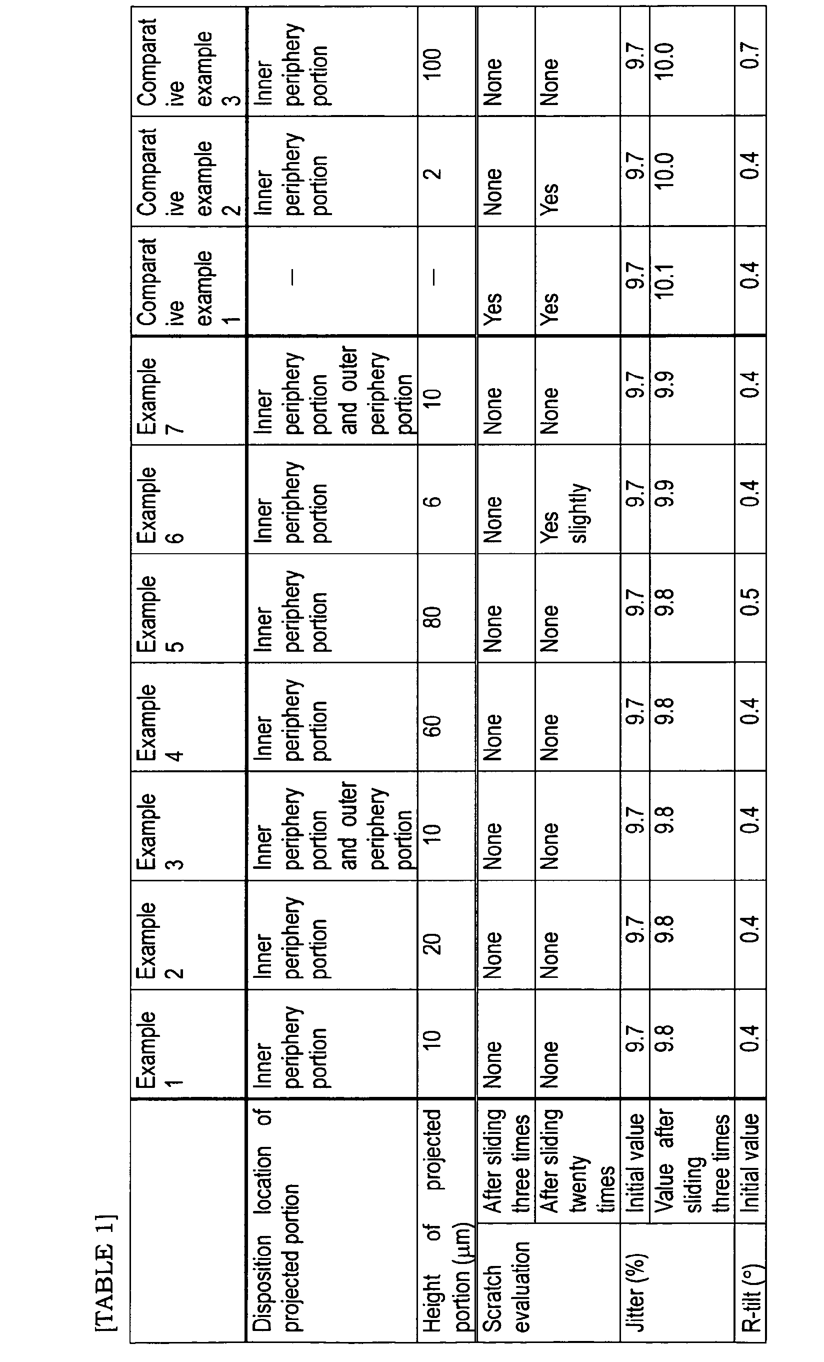

It was found that from the results shown in Table 1 that the optical information recording mediums according to examples 1 through 7, in both three-times sliding and twenty-times sliding, did hardly exhibit scratch on light incidence surfaces. The jitters of the optical information recording mediums according to examples 1 through 7 exhibited small variations between the initial values and the values after three-times sliding, and the initial radial tilts were kept small.

On the contrary, in the optical information recording medium according to comparative example 1, it was found that since a projected portion was not disposed on the light incidence surface on the cover layer, owing to the sliding, scratch was caused on the light incidence surface. In addition to this, the initial radial tilt was kept small; however, difference between the initial value of the jitter and the value thereof after three-times sliding was big.

In the optical information recording medium according to comparative example 2, since a projected portion was disposed on a light incidence surface of the cover layer, after sliding three times, the light incidence surface did not exhibit the scratch. However, since the height thereof was not sufficient, after sliding twenty times, the scratch was developed. In addition to this, though the initial radial tilt was suppressed small, difference between the initial value of the jitter and the value after three-times sliding was big.

In the optical information recording medium according to comparative example 3, since a projected portion with a sufficient height was disposed on a light incidence surface of a cover layer, in neither cases of sliding three times nor sliding twenty times the light incidence surface did not exhibit the scratch. The initial radial tilt was big and the difference between the initial value of the jitter and the value of the jitter measured after sliding three times was also big. It is speculated that owing to the local existence of the projected portion too high in the inner periphery portion of the cover layer, in-plane balance could not be obtained to result in generating warp.

## Claims

1. An optical information recording medium comprising, on a substrate, a pit or recording layer and a cover layer in this order and in which laser light is irradiated from a cover layer side to perform at least one of recording and reproducing, wherein a surface, of the cover layer, on which the laser light is irradiated has a projected portion having a height in the range of 3 to 90 µm.

2. The optical information recording medium according to claim 1, wherein the projected portion has a height in the range of 9 to 30 µm.

3. The optical information recording medium according to any one of claims 1 through 2, wherein the projected portion comprises a resin selected from the group of a radiation curable resin, a thermosetting resin and a heat-drying resin.

4. The optical information recording medium according to any one of claims 1 through 3, wherein the projected portion is disposed according to a printing method.

5. The optical information recording medium according to any one of claims 1 through 4, wherein a film thickness of the cover layer is in the range of 0.01 to 0.5 mm.

6. The optical information recording medium according to any one of claims 1 through 5, wherein a thickness of the substrate is in the range of 0.7 to 2 mm.

7. A manufacturing method of an optical information recording medium comprising the step of: disposing a pit or recording layer on a substrate, disposing a cover layer on the pit or recording layer, and disposing a projected portion having a height in the range of 3 to 90 µm on the cover layer according to a printing method.

8. The manufacturing method of an optical information recording medium according to claim 7, wherein the printing method is one selected from the group consisting of a screen printing method and an offset printing method.

9. The manufacturing method of an optical information recording medium according to claim 8, wherein the printing method is a screen printing method.

10. An optical information recording method comprising the step of: irradiating laser light having a wavelength in the range of 100 to 600 nm from a cover layer side on an optical information recording medium that has, on a substrate, a recording layer and a cover layer in this order and has, on the cover layer, a projected portion having a height in the range of 3 to 90 µm; and thereby causing the recording layer to change physically or chemically to record.
